# EUROPÄISCHE PATENTANMELDUNG

(11) **EP 4 848 106 A1**
(43) Veröffentlichungstag der Anmeldung: **02.12.2026**
(21) Anmeldenummer: 26181344.8
(22) Anmeldetag: 27.05.2026
(51) Int. Cl.: G06F 16/483, G06F 16/215

(54) **COMPUTERIMPLEMENTIERTES VERFAHREN ZUM ÜBERPRÜFEN VON DATENSÄTZEN UND ZUM ANNOTIEREN EINES DATENSATZES**

(30) Priorität: 28.05.2025 DE 102025121158
(71) Anmelder: septArtes GmbH, 50676 Köln (DE)
(72) Erfinder: Börries, Alexander, 50676 Köln (DE)
(74) Vertreter: Pfenning, Meinig & Partner mbB

(57) **Zusammenfassung**

Die Erfindung betrifft ein computerimplementiertes Verfahren und eine Vorrichtung (2) zum Überprüfen von Datensätzen. Die Erfindung betrifft ferner ein computerimplementiertes Verfahren und eine Vorrichtung (102) zum Annotieren eines Datensatzes. Die Erfindung betrifft außerdem ein Computerprogramm und ein computerlesbares Speichermedium. Dabei umfassen die Datensätze einen ersten Datensatz (4), welcher erste Informationen mit Bild-, Audio- und/oder Videoinformationen enthält, wobei die ersten Informationen zumindest einen Informationskontext (8) und zumindest einen dem Informationskontext (8) zugeordneten Informationsinhalt (6) umfassen. Ferner umfassen die Datensätze einen zweiten Datensatz (14), welcher zweite Informationen in einem strukturierten Datenformat enthält, wobei die zweiten Informationen zumindest einen Informationskontext (18) und zumindest einen dem Informationskontext (18) zugeordneten Informationsinhalt (16) umfassen, wobei der Informationskontext (18) der zweiten Informationen dem Informationskontext (8) der ersten Informationen entspricht. Das Verfahren umfasst die Schritte: Extrahieren (D, EE), aus dem ersten Datensatz (4), zumindest eines der Informationsinhalte (6) und jenes diesem Informationsinhalt (6) zugeordneten Informationskontextes (8), Vergleichen (G) des zumindest einen aus dem ersten Datensatz (4) extrahierten Informationsinhalts (6) mit zumindest einem Informationsinhalt (16) der zweiten Informationen, der einem Informationskontext (18) der zweiten Informationen zugeordnet ist, der jenem Informationskontext (8) der ersten Informationen entspricht, der dem aus dem ersten Datensatz (4) extrahierten ersten Informationsinhalt (6) zugeordnet ist, und Ausgeben (H) eines Prüfungsergebnisses, ob und welcher der aus dem ersten Datensatz (4) extrahierte Informationsinhalt (6) mit dem mit diesem verglichenen Informationsinhalt (16) aus den zweiten Informationen übereinstimmt.

## Beschreibung

Die Erfindung betrifft ein computerimplementiertes Verfahren und eine Vorrichtung zum Überprüfen von Datensätzen. Die Erfindung betrifft ferner ein computerimplementiertes Verfahren und eine Vorrichtung zum Annotieren eines Datensatzes. Die Erfindung betrifft außerdem ein Computerprogramm und ein computerlesbares Speichermedium.

Verfahren zum Überprüfen von Datensätzen sind bekannt, bei denen Daten manuell und stichprobenartig überprüft werden. Häufig erfolgt dabei lediglich eine oberflächliche Plausibilitätsprüfung.

Zudem ist es bekannt, Fehler in strukturierten Daten mittels computerimplementierter Verfahren zu erkennen. Bei strukturierten Daten liegen Strukturinformationen vor, welche eine Struktur, ein Schema, ein Regelwerk und/oder ein Protokoll angeben. Fehler können durch ein Computerprogramm unter Berücksichtigung dieser Strukturinformationen erkannt werden.

Vor diesem Hintergrund besteht eine Aufgabe der vorliegenden Erfindung darin, das Überprüfen von Datensätzen zu verbessern. Eine weitere Aufgabe der vorliegenden Erfindung besteht darin, das Annotieren eines Datensatzes zu verbessern.

Diese Aufgabe wird erfindungsgemäß durch ein computerimplementiertes Verfahren mit den Merkmalen des Patentanspruchs 1 gelöst.

Erfindungsgemäß wird ein computerimplementiertes Verfahren zum Überprüfen von Datensätzen angegeben. Dabei umfassen die Datensätze einen ersten Datensatz, welcher erste Informationen mit Bild-, Audio- und/oder Videoinformationen enthält, wobei die ersten Informationen zumindest einen Informationskontext und zumindest einen dem Informationskontext zugeordneten Informationsinhalt umfassen. Ferner umfassen die Datensätze einen zweiten Datensatz, welcher zweite Informationen in einem strukturierten Datenformat enthält. Die zweiten Informationen umfassen zumindest einen Informationskontext und zumindest einen dem Informationskontext zugeordneten Informationsinhalt. Dieser Informationskontext der zweiten Informationen entspricht dem Informationskontext der ersten Informationen. Das Verfahren umfasst die Schritte: Extrahieren, aus dem ersten Datensatz, zumindest eines der Informationsinhalte und jenes diesem Informationsinhalt zugeordneten Informationskontextes. Das Verfahren umfasst ferner: Vergleichen des zumindest einen aus dem ersten Datensatz extrahierten Informationsinhalts mit zumindest einem Informationsinhalt der zweiten Informationen, der einem Informationskontext der zweiten Informationen zugeordnet ist, der jenem Informationskontext der ersten Informationen entspricht, der dem aus dem ersten Datensatz extrahierten ersten Informationsinhalt zugeordnet ist. Das Verfahren umfasst ferner:
Ausgeben eines Prüfungsergebnisses, ob und welcher der aus dem ersten Datensatz extrahierte Informationsinhalt mit dem mit diesem verglichenen Informationsinhalt aus den zweiten Informationen übereinstimmt.

Im Zuge der Digitalisierung werden unterschiedliche Aufgaben, die bisher manuell ausgeführt wurden, zunehmend automatisiert. Standardisierte Datenformate ermöglichen einen einfachen Informationsaustausch und Informationsspeicherung. Es kommt hinzu, das visuelle Daten (Bild, Text, Video, etc.) und Audiodaten, die in einem unstrukturierten Datenformat vorliegen, häufig mit strukturierten Daten als Metadaten versehen sind. Diese Metadaten können ergänzende Informationen enthalten, eine Inhaltsbeschreibung repräsentieren und/oder eine exakte strukturierte Repräsentation der Bild-, Audio- und/oder Videoinformationen sein.

Im Falle einer strukturierten Repräsentation von Bild-, Audio- und/oder Videoinformationen entstehen zwei getrennte Ebenen, die den gleichen Informationsgehalt haben sollen. Allerdings werden unbeabsichtigte oder beabsichtige Unterschiede zwischen den Informationsinhalten aufgrund der getrennten Behandlung der Ebenen nicht in jedem Fall erkannt. Diese Unterschiede können beispielsweise bei einem fehlerhaften Transkript einer Audiodatei, bei einer Manipulation einer XML-Datei (eXtensible Markup Language), die einem PDF-Formular zugeordnet ist, und/oder bei gefälschten Rechnungsdaten einer E-Rechnung relevant werden.

Die erfindungsgemäße Lösung behebt diese Probleme, indem die Informationsinhalte und die zugeordneten Informationskontexte aus dem ersten Datensatz extrahiert werden. Diese extrahierten ersten Informationen werden mit den zweiten Informationen dahingehend verglichen, ob die entsprechenden Informationsinhalte, die einem entsprechenden Informationskontext zugeordnet sind, übereinstimmen. Damit wird ein Verfahren geschaffen, das eine automatisierte Überprüfung der getrennten Ebenen ermöglicht.

Insbesondere kann das erfindungsgemäße Verfahren auch der automatisierten Konsistenzprüfung zwischen unstrukturierten Bild-, Audio- und/oder Videodaten einerseits und strukturierten Metadaten andererseits dienen. Dieses technische Problem kann insbesondere auch bei der maschinellen Verarbeitung von Dokumenten auftreten, bei denen dieselbe Information z. B. in unterschiedlichen Datenformaten vorliegt, so dass Inkonsistenzen zwischen diesen Formaten zu Fehlfunktionen in nachgelagerten Datenverarbeitungssystemen führen können. Dadurch kann das erfindungsgemäße Verfahren beispielsweise eine technische Verbesserung der Datenintegrität in computergestützten Verarbeitungsketten bewirken.

Der erste und/oder zweite Datensatz ist vorzugsweise Teil eines Dokuments, wobei das Dokument weiter vorzugsweise als Datei realisiert ist. Die Datei für den ersten Datensatz ist beispielsweise eine PDF-Datei (PDF: Portable Document Format), eine JPEG-Datei (JPEG: Joint Photographic Experts Group), eine PNG-Datei (PNG: Portable Network Graphics), etc. Die Datei für den zweiten Datensatz ist beispielsweise eine Json-Datei (JavaScript Object Notation), XML-Datei, CSV-Datei (Comma-separated values), etc.

Unter dem Begriff "Informationskontext" kann die Bedeutung des Informationsinhalts verstanden werden. Beispielsweise gibt der Informationskontext bei einer Rechnungsnummer die Information an, dass es sich bei einer Nummer mit einem bestimmten Wert (Informationsinhalt) um eine Rechnungsnummer (Informationskontext) handelt.

Der Begriff "strukturiertes Datenformat" kann dahingehend verstanden werden, dass Daten in einem vordefinierten Format bzw. in einer vorgegebenen Struktur organisiert und gespeichert werden. Das bedeutet beispielsweise, dass die Daten in klar definierten Feldern oder Tabellen abgelegt werden, wobei jeder Datensatz nach gleichen oder entsprechenden Regeln aufgebaut ist.

Demgegenüber weisen unstrukturierte Daten keine feste, vordefinierte Struktur auf. Beispiele für unstrukturierte Daten sind Bilder, Videos, Audiodateien und Sensordaten.

Vorzugsweise enthält der erste Datensatz die ersten Informationen in einem unstrukturierten Datenformat.

Das Extrahieren erfolgt vorzugsweise mit Hilfe eines mathematischen Modells. Beispielsweise kann für das Extrahieren von Bildinformationen ein Vision Transformer (ViT) verwendet werden. Dieser zerlegt die Bildinformation in Patches, die einen Teilbereich des Bilds repräsentieren. Diese Patches werden in Reihe von einem Transformer-Encoder verarbeitet. Der ViT basiert demnach auf einer Transformer-Architektur. Eine Eingangsvariable des ViTs ist beispielsweise eine PDF-Datei, welche bei Anzeige mittels einer Anzeigeeinheit eine Rechnung zeigt. Eine Ausgangsvariable ist beispielsweise der erkannte Informationsinhalt und/oder der erkannte zugeordnete Informationskontext. Als Trainingsdaten können E-Rechnungen nach dem ZUGFeRD-Format (Zentraler User Guide des Forums elektronische Rechnung Deutschland) verwendet werden, für die der korrekte, unverfälschte Output des ViTs bekannt ist. Die Eingangsvariable für das Training ist demnach die PDF-Datei der elektronischen Rechnung im ZUGFeRD-Format.

Alternativ oder zusätzlich kann das Extrahieren mit Hilfe eines mathematischen Modells erfolgen, bei dem eine Faster R-CNN- oder Mask R-CNN-Architektur (Region-Based Convolutional Neural Network) verwendet wird. Faster R-CNN basiert auf einem Convolutional Neural Network (CNN) mit einer Mehrzahl von Schichten und nutzt ein Region Proposal Network (RPN), um relevante Bildbereiche effizient zu identifizieren. Eine Eingangsvariable der Architektur ist beispielsweise die PDF-Datei als zweidimensionales Bild, das bei Anzeige mittels einer Anzeigeeinheit eine Rechnung zeigt. Eine Ausgangsvariable ist beispielsweise der erkannte Informationsinhalt und/oder der erkannte zugeordnete Informationskontext. Das Training erfolgt beispielsweise durch überwachtes Lernen. Als Trainingsdaten können E-Rechnungen nach dem ZUGFeRD-Format (Zentraler User Guide des Forums elektronische Rechnung Deutschland) verwendet werden, für die der korrekte, unverfälschte Output der Faster R-CNN- oder Mask R-CNN-Architektur bekannt ist.

Alternativ oder zusätzlich kann das Extrahieren beispielsweise mit Hilfe eines mathematischen Modells erfolgen, bei dem eine LayoutLMv3-Architektur verwendet wird. LayoutLMv3 basiert auf einem Transformer-Modell, das speziell für die Verarbeitung von Dokumenten entwickelt wurde und neben Textinformationen auch Layout- und visuelle Merkmale berücksichtigt. Eine Eingangsvariable der Architektur ist beispielsweise die PDF-Datei als zweidimensionales Bild, das bei Anzeige mittels einer Anzeigeeinheit eine Rechnung zeigt. Eine Ausgangsvariable ist beispielsweise der erkannte Informationsinhalt und/oder der erkannte zugeordnete Informationskontext. Das Training erfolgt beispielsweise durch überwachtes Lernen. Als Trainingsdaten können E-Rechnungen nach dem ZUGFeRD-Format verwendet werden, für die der korrekte, unverfälschte Output der LayoutLMv3-Architektur bekannt ist.

Alternativ oder zusätzlich kann das Extrahieren beispielsweise mit Hilfe eines mathematischen Modells erfolgen, bei dem ein multimodales Large Language Model (multimodales LLM) verwendet wird. Ein multimodales LLM ist dazu eingerichtet, Eingangsvariablen unterschiedlicher Modalitäten, insbesondere Textinformationen und Bildinformationen, gemeinsam zu verarbeiten und Beziehungen zwischen diesen Eingangsvariablen zu berücksichtigen. Eine Eingangsvariable des multimodalen LLM ist beispielsweise die PDF-Datei als zweidimensionales Bild, das bei Anzeige mittels einer Anzeigeeinheit eine Rechnung zeigt. Zusätzlich oder alternativ kann die Eingangsvariable eine aus der PDF-Datei gewonnene Textinformation, eine Layoutinformation, eine Positionsinformation und/oder eine Metainformation umfassen. Das multimodale LLM kann insbesondere dazu eingerichtet sein, in der Rechnung enthaltene Informationsinhalte, beispielsweise Rechnungsnummern, Rechnungsdaten, Beträge, Steuerangaben, Adressdaten und/oder Positionsdaten, zu erkennen und dem jeweiligen Informationskontext zuzuordnen. Eine Ausgangsvariable des multimodalen LLM ist beispielsweise der erkannte Informationsinhalt und/oder der erkannte zugeordnete Informationskontext. Das multimodale LLM kann beispielsweise mittels einer Anweisung, insbesondere eines Prompts, dazu veranlasst werden, den erkannten Informationsinhalt in einer vorgegebenen strukturierten Form, beispielsweise in einem JSON-, XML- und/oder tabellarischen Format, auszugeben. Das multimodale LLM kann vortrainiert sein und/oder anhand von Trainingsdaten angepasst werden. Als Trainingsdaten und/oder als in einer Anweisung bereitgestellte Beispieldaten können E-Rechnungen nach dem ZUGFeRD-Format verwendet werden, für die der korrekte, unverfälschte Informationsinhalt und/oder Informationskontext bekannt ist.

Alternativ oder zusätzlich kann das Extrahieren beispielsweise mit Hilfe eines oder mehrerer Agenten erfolgen, die jeweils eines oder mehrere der vorgenannten Verfahren, insbesondere ein multimodales Large Language Model (multimodales LLM), nutzen. Ein Agent ist beispielsweise eine softwareimplementierte Verarbeitungseinheit, die dazu eingerichtet ist, auf Grundlage einer Eingangsvariablen und einer vorgegebenen Aufgabe wenigstens eine Verarbeitungshandlung auszuwählen und mittels eines der vorgenannten Verfahren auszuführen oder ausführen zu lassen. Eine Eingangsvariable eines Agenten ist beispielsweise die PDF-Datei als zweidimensionales Bild, das bei Anzeige mittels einer Anzeigeeinheit eine Rechnung zeigt, und/oder eine aus der PDF-Datei gewonnene Text-, Layout-, Positions- und/oder Metainformation. Ein erster Agent kann beispielsweise dazu eingerichtet sein, Informationsinhalte der Rechnung zu erkennen und zu extrahieren. Ein zweiter Agent kann beispielsweise dazu eingerichtet sein, die extrahierten Informationsinhalte einem Informationskontext zuzuordnen, auf Vollständigkeit und/oder Plausibilität zu überprüfen und/oder fehlerhafte oder unvollständige Extraktionsergebnisse zu korrigieren. Alternativ kann ein einzelner Agent die vorgenannten Verarbeitungshandlungen nacheinander und/oder iterativ durchführen. Dabei kann der Agent eines oder mehrere der vorgenannten Verfahren, insbesondere das multimodale LLM, mehrfach anwenden, Zwischenergebnisse verarbeiten und in Abhängigkeit von einem Zwischenergebnis weitere Verarbeitungshandlungen auswählen. Eine Ausgangsvariable des einen oder der mehreren Agenten ist beispielsweise der erkannte Informationsinhalt und/oder der erkannte zugeordnete Informationskontext, insbesondere in einer vorgegebenen strukturierten Form. Die Agenten können jeweils dasselbe der vorgenannten Verfahren, insbesondere dasselbe multimodale LLM, oder unterschiedliche der vorgenannten Verfahren, insbesondere unterschiedliche multimodale LLM, nutzen. Als Referenzdaten, Trainingsdaten und/oder als in einer Anweisung bereitgestellte Beispieldaten können E-Rechnungen nach dem ZUGFeRD-Format verwendet werden, für die der korrekte, unverfälschte Informationsinhalt und/oder Informationskontext bekannt ist.

Weitere mathematische Modelle, mit deren Hilfe das Extrahieren erfolgen kann, umfassen YOLO (You Only Look Once), EfficienDet, SSD (Single Shot MultiBox Detector), RetinaNet, CenterNet, Cascade R-CNN, DETR (Detection Transformer) und RT-DETR, Segment Anything Model (SAM) und SAM 2, Detectron2, FastSAM, YOLACT, DETIC, OneFormer und/oder SAM-CLIP.

Die genannten konkreten mathematischen Modelle können für eine Erkennung von Text vorteilhaft mit OCR (Optical Character Recognition) kombiniert werden. Zudem ist eine Kombination mit weiteren mathematischen Modellen auf dem Gebiet der künstlichen Intelligenz bevorzugt, beispielsweise um eine Verknüpfung zwischen den erkannten Informationsinhalten und zugeordneten Informationskontexten herzustellen.

Ein weiteres bevorzugtes Anwendungsbeispiel des erfindungsgemäßen Verfahrens ist die Überprüfung von Metadaten, die in einer Fotodatei hinterlegt sind. So können zum Beispiel Bildbeschreibungen oder eine Ortsinformation, die den Ort der Aufnahme des Fotos angibt, überprüft werden.

Das Ausgeben des Prüfergebnisses kann beispielsweise mittels einer optischen Anzeigeeinheit erfolgen, die von einem Benutzer wahrnehmbar ist. Beispielsweise kann ein fehlerhafter Informationsinhalt als Markierung in dem PDF-Dokument angezeigt werden.

Vorzugsweise umfasst die Vorrichtung eine Signiereinheit, die eingerichtet ist, das ausgegebene Prüfergebnis zu signieren, weiter vorzugsweise digital zu signieren.

Gemäß einer bevorzugten Ausführungsform des erfindungsgemäßen computerimplementierten Verfahrens kann der zweite Datensatz als die zweiten Informationen eine strukturierte Repräsentation der ersten Informationen des ersten Datensatzes umfassen. Besonders in diesem Fall ist eine Prüfung dahingehend vorteilhaft, ob und welcher der aus dem ersten Datensatz extrahierten Informationsinhalte mit dem mit diesem verglichenen Informationsinhalt aus den zweiten Informationen übereinstimmt. Denn entsprechende Informationsinhalte sollten in der Konstellation dieser Ausführungsform vorzugsweise gleich sein.

Gemäß einer weiteren bevorzugten Ausführungsform des erfindungsgemäßen computerimplementierten Verfahrens kann das Extrahieren zumindest eines der Informationsinhalte und jenes diesem Informationsinhalt zugeordneten Informationskontextes mittels Audioerkennung und/oder Bilderkennung und/oder Texterkennung erfolgen. Bei Audioinformationen als Teil der ersten Informationen kann das Extrahieren insbesondere mittels Audioerkennung erfolgen. Hierbei kann beispielsweise ein Text mittels einer Speech-To-Text-Architektur aus den Audiodaten extrahiert werden. Bei ersten Informationen, die Bildinformationen enthalten, kann das Extrahieren mittels Bilderkennung erfolgen. Bei ersten Informationen, die Textinformationen enthalten, kann die Texterkennung beispielsweise OCR umfassen. Textinformationen sind demnach vorzugsweise unter Bildinformationen zu fassen, wenn die Buchstaben des Textes mittels Objekterkennung zunächst erkannt werden müssen, um den Text zu extrahieren.

Bei einer weiteren bevorzugten Ausführungsform des erfindungsgemäßen computerimplementierten Verfahrens können die ersten Informationen Teil einer Audiodatei und die zweiten Informationen ein computerlesbares Transskript der Audiodatei sein. Hierbei handelt es sich um einen vorteilhaften Anwendungsfall des erfindungsgemäßen Verfahrens, denn eine Verfälschung von Transskripten von Audiodateien kann erheblichen Einfluss auf die Rezeption des Inhalts haben. Inhalte werden bei Verfälschung beispielsweise inkorrekt verstanden. Dies kann zu Missverständnissen bei einer gewünschten Kommunikation und, bei einem großen Adressatenkreis, zu hohen Kosten bei der Aufklärung der Missverständnisse führen. Ein konkretes Beispiel ist das Audio-Transkript eines Meetings, beispielsweise für eine Vertragsverhandlung. Bei dieser Ausführungsform kann das Extrahieren vorzugsweise mittels Spech-To-Text erfolgen.

Gemäß einer weiteren bevorzugten Ausführungsform des erfindungsgemäßen computerimplementierten Verfahrens können die ersten Informationen Teil einer PDF-Datei sein. Dieser Anwendungsfall ist besonders geeignet für die Überprüfung von Fälschungen, denn PDF-Dateien werden häufig für die Bereitstellung, Verwaltung und den Austausch wirtschaftlich und technisch relevanter Informationen, beispielsweise in Formularen, verwendet. Hierbei ist es von besonderer Wichtigkeit, die Korrektheit entsprechender Informationsinhalte zu prüfen.

Gemäß einer weiteren bevorzugten Ausführungsform des erfindungsgemäßen computerimplementierten Verfahrens können die ersten Informationen Rechnungsinformationen umfassen. Dabei kann der zweite Datensatz eine computerlesbare Rechnung beispielsweise im Json-, YAML- und/oder XML-Format umfassen. Alternativ oder zusätzlich können der erste Datensatz und der zweite Datensatz Teil einer E-Rechnung sein.

JSON (JavaScript Object Notation) ist ein einfaches Format zum Austausch von strukturierten Daten. Seine Einfachheit und Lesbarkeit machen es zu einer geeigneten Wahl für viele Anwendungsfälle.

YAML ist ein benutzerfreundliches und flexibles Datenformat. Aufgrund seiner guten Lesbarkeit und Unterstützung komplexer Datenstrukturen ist es in vielen Bereichen der Softwareentwicklung und Systemadministration etabliert. YAML ist eine Obermenge von JSON. D.h. jedes gültige JSON-Dokument ist auch ein gültiges YAML-Dokument.

XML (eXtensible Markup Language) ist ein besonders häufig verwendetes Format, insbesondere bei der Verarbeitung von Daten in wirtschaftlichen und technischen Anwendungsgebieten. XML hat eine ausführlichere Syntax als Json und ist dadurch zwar komplexer aufgebaut, jedoch flexibler einsetzbar.

Die e-Rechnung kann beispielsweise das Format ZUGFeRD aufweisen. Es weist eine PDF-Datei und eine hinterlegte, eingebettete und/oder beigefügte standardisierte XML-Datei auf. Dabei kann die PDF-Datei bei Darstellung mittels einer Anzeige für Menschen lesbar sein. Die XML-Datei kann für das Lesen durch eine Maschine (beispielsweise einen Computer) vorgesehen sein und die Rechnungsdaten können in strukturierter Form in der XML-Datei enthalten sein. Diese strukturierten Daten können dann von verschiedenen Computersystemen automatisch verarbeitet werden, beispielsweise für die Buchhaltung oder das Rechnungswesen. Alternativ oder zusätzlich kann die e-Rechnung beispielsweise das Format X-Rechnung aufweisen.

Durch das Extrahieren gemäß dem erfindungsgemäßen computerimplementierten Verfahren werden die Informationsinhalte und zugeordnete Informationskontexte aus der PDF-Datei extrahiert und können mit den strukturierten Daten der XML-Datei verglichen werden.

Gemäß einer weiteren bevorzugten Ausführungsform des erfindungsgemäßen computerimplementierten Verfahrens kann durch das Extrahieren des zumindest einen der Informationsinhalte und des diesem Informationsinhalt zugeordneten Informationskontextes ein teilweises oder vollständiges Duplikat der ersten Informationen erstellt werden. Dieses Duplikat kann computerlesbar sein. Beim Vergleichen kann zumindest ein Informationsinhalt aus dem Duplikat mit dem zumindest einen Informationsinhalt der zweiten Informationen verglichen werden. Durch diese Ausführungsform wird der Vergleich vereinfacht. Das Duplikat ist einfacher handhabbar als das Original, welches den ersten Datensatz enthält. Das Duplikat kann weiterverarbeitet werden, ohne das Original mit dem ersten Datensatz zu verändern.

Im Beispiel einer E-Rechnung im ZUGFeRD-Format kann es sich bei dem Duplikat beispielsweise um eine XML-Datei handeln, die mit der XML-Datei, die in der PDF-Datei eingebettet oder interlegt ist, verglichen werden kann.

Nach dieser Ausführungsform kann die Ausgabe des vorstehend beschriebenen mathematischen Modells (beispielsweise ViT) vorzugsweise das Duplikat sein.

Bei einer weiteren bevorzugten Ausführungsform des erfindungsgemäßen computerimplementierten Verfahrens kann das Extrahieren, aus dem ersten Datensatz, zumindest eines der Informationsinhalte und jenes diesem Informationsinhalt zugeordneten Informationskontextes anhand eines Schemas erfolgen. Mittels des Schemas können Informationsinhalte und Informationskontexte des ersten Datensatzes Informationsinhalten und Informationskontexten des zweiten Datensatzes einander zugeordnet sein. Dies ist eine besonders zweckmäßige Ausführungsform für das Extrahieren. Das Schema stellt hierbei eine Hilfestellung bereit, anhand derer das Extrahieren einem Regelwerk folgen kann oder zumindest durch das Schema unterstützt wird. Dabei kann das Schema beispielsweise abhängig von der Struktur der strukturierten Daten sein.

Gemäß einer alternativen bevorzugten Ausführungsform des erfindungsgemäßen computerimplementierten Verfahrens kann das Extrahieren, aus dem ersten Datensatz, zumindest eines der Informationsinhalte und jenes diesem Informationsinhalt zugeordneten Informationskontextes, anhand von zumindest einem Informationskontext des zweiten Datensatzes erfolgen. Beim Vergleichen kann der so aus dem ersten Datensatz extrahierte Informationsinhalt mit dem Informationsinhalt der zweiten Informationen verglichen werden, der dem Informationskontext dieses Informationsinhalts der zweiten Informationen zugeordnet ist.

Vorzugsweise wird in einer Abfolge von Verfahrensschritten zunächst der Informationsinhalt und Informationskontext des zweiten Datensatzes im strukturierten Datenformat ausgelesen. Im Anschluss daran kann das Extrahieren aus dem ersten Datensatz erfolgen. Bei dem Extrahieren aus dem ersten Datensatz kann der Informationskontext des zweiten Datensatzes als Grundlage für die Extraktion verwendet werden. Das heißt, das Wissen über den Informationskontext kann aus dem zweiten Datensatz stammen. Dieses Wissen kann bei der Extraktion des Informationskontextes aus dem ersten Datensatz genutzt werden. So ist nämlich bekannt, nach welchem Informationskontext im ersten Datensatz gesucht werden muss.

Die eingangs genannte Aufgabe wird ferner durch ein computerimplementiertes Verfahren zum Annotieren eines Datensatzes gelöst, wobei der Datensatz erste Informationen mit Bild-, Audio- und/oder Videoinformationen enthält. Die ersten Informationen umfassen zumindest einen Informationskontext und zumindest einen dem Informationskontext zugeordneten Informationsinhalt. Bei dem Verfahren wird aus dem Datensatz zumindest einer der Informationsinhalte und jener diesem Informationsinhalt zugeordnete Informationskontext extrahiert. Weiter wird bei dem Verfahren der erkannte Informationsinhalt und der diesem zugeordnete Informationskontext in ein strukturiertes Datenformat überführt. Ferner wird der in das strukturierte Datenformat überführte Informationsinhalt und der diesem zugeordnete Informationskontext zu dem Datensatz als Metainformation hinzugefügt.

Das Extrahieren, Überführen und Hinzufügen kann vorzugsweise als Annotieren des ersten Datensatzes mit Metainformationen verstanden werden.

Der annotierte Datensatz kann in einem nachgelagerten Verfahren überprüft werden. Hierzu eignet sich insbesondere das Verfahren zum Überprüfen von Datensätzen der vorstehend beschriebenen Art.

Die eingangs genannte Aufgabe wird ferner durch ein Computerprogramm mit Programmcode gelöst. Der Programmcode veranlasst einen Computer bei Ausführung auf diesem, das computerimplementierte Verfahren zum Überprüfen von Datensätzen der vorstehend beschriebenen Art oder das computerimplementierte Verfahren zum Annotieren eines Datensatzes der vorstehend beschrieben Art auszuführen. Die Erfindung betrifft ferner ein Computerprogrammprodukt mit einem Computerprogramm dieser Art.

Die eingangs genannte Aufgabe wird ferner durch das eingangs genannte computerlesbare Speichermedium mit Programmcode der vorstehend beschriebenen Art gelöst. Der Programmcode veranlasst bei Ausführung auf einem Computer diesen, das computerimplementierte Verfahren zum Überprüfen von Datensätzen der vorstehend beschriebenen Art und/oder das computerimplementierte Verfahren zum Annotieren eines Datensatzes der vorstehend beschriebenen Art auszuführen. Das Speichermedium speichert das Computerprogramm und/oder stellt dieses bereit. Das Speichermedium ist beispielsweise eine Speichereinheit, die das Computerprogramm speichert und/oder bereitstellt. Alternativ und/oder zusätzlich ist das Speichermedium beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogramm vorzugsweise in Form eines Datenstroms speichert und/oder bereitstellt.

Die Bereitstellung kann in Form eines Programmdatenblocks als Datei erfolgen, insbesondere als Downloaddatei, oder als Datenstrom, insbesondere als Downloaddatenstrom, des Computerprogramms. Diese Bereitstellung kann beispielsweise aber auch als partieller Download erfolgen, der aus mehreren Teilen besteht. Ein solches Computerprogramm wird beispielsweise unter Verwendung der Bereitstellungsvorrichtung in ein System eingelesen, sodass das erfindungsgemäße Verfahren auf einem Computer zur Ausführung gebracht wird.

Die eingangs genannte Aufgabe wird erfindungsgemäß ferner durch eine Vorrichtung zum Überprüfen von Datensätzen eingangs genannter Art gelöst.

Demgemäß umfassen die Datensätze bei einer Vorrichtung dieser Art einen ersten Datensatz, welcher erste Informationen mit Bild-, Audio- und/oder Videoinformationen enthält, wobei die ersten Informationen zumindest einen Informationskontext und zumindest einen dem Informationskontext zugeordneten Informationsinhalt umfassen. Die Datensätze umfassen ferner einen zweiten Datensatz, welcher zweite Informationen in einem strukturierten Datenformt enthält, wobei die zweiten Informationen zumindest einen Informationskontext und zumindest einen dem Informationskontext zugeordneten Informationsinhalt umfassen, wobei der Informationskontext der zweiten Informationen dem Informationskontext der ersten Informationen entspricht. Die Vorrichtung umfasst eine Extraktionseinheit, welche eingerichtet ist, aus dem ersten Datensatz zumindest einen der Informationsinhalte und jenen diesem Informationsinhalt zugeordneten Informationskontext, zu extrahieren. Die Vorrichtung umfasst ferner eine Vergleichseinheit, welche eingerichtet ist, den zumindest einen aus dem ersten Datensatz extrahierten Informationsinhalt mit zumindest einem Informationsinhalt der zweiten Informationen, der einem Informationskontext der zweiten Informationen zugeordnet ist, der jenem Informationskontext entspricht, der dem aus dem ersten Datensatz extrahierten ersten Informationsinhalt zugeordnet ist, zu vergleichen. Die Vorrichtung umfasst weiter eine Ausgabeeinheit, welche eingerichtet ist, ein Prüfergebnis auszugeben, ob und welcher der aus dem ersten Datensatz extrahierte Informationsinhalt mit dem mit diesem verglichenen Informationsinhalt aus den zweiten Informationen übereinstimmt.

Die Extraktionseinheit kann als Hardwarekomponente ausgebildet sein, die für die Ausführung der mathematischen Modelle zur Extraktion der Informationsinhalte und Informationskontexte eingerichtet ist. Die Extraktionseinheit kann insbesondere eine Zentralprozessoreinheit (CPU), eine Grafikprozessoreinheit (GPU) und/oder eine Tensor Processing Unit (TPU) umfassen oder nutzen. Die Verarbeitung der Bild-, Audio- und/oder Videoinformationen mittels der beschriebenen Architekturen, insbesondere des Vision Transformers (ViT), der CNN-basierten Architekturen und/oder des multimodalen LLM, kann z. B. durch parallele Verarbeitung auf verschiedenen Hardwarekomponenten oder auf verschiedenen spezialisierten Hardwarekomponenten beschleunigt werden.

Die eingangs genannte Aufgabe wird erfindungsgemäß ferner durch eine Vorrichtung zum Annotieren eines Datensatzes eingangs genannter Art gelöst.

Demgemäß enthält der Datensatz bei einer Vorrichtung dieser Art erste Informationen mit Bild-, Audio- und/oder Videoinformationen. Die ersten Informationen umfassen zumindest einen Informationskontext und zumindest einen dem Informationskontext zugeordneten Informationsinhalt. Die Vorrichtung umfasst eine Extraktionseinheit, die eingerichtet ist, aus dem Datensatz zumindest einen der Informationsinhalte und jenen diesem Informationsinhalt zugeordneten Informationskontext zu extrahieren. Die Vorrichtung umfasst ferner eine Überführungseinheit, die eingerichtet ist, den erkannten ersten Informationsinhalt und den diesem zugeordneten Informationskontext in ein strukturiertes Datenformat zu überführen. Außerdem umfasst die Vorrichtung eine Hinzufügungseinheit, die eingerichtet ist, den in das strukturierte Datenformat überführten Informationsinhalt und den diesem zugeordneten Informationskontext zu dem Datensatz als Metainformation hinzuzufügen.

Vorzugsweise umfasst die Vorrichtung eine Signiereinheit, die eingerichtet ist, die hinzugefügte Metainformation zu signieren, weiter vorzugsweise digital zu signieren.

Zu Vorteilen, Ausführungsformen und Ausgestaltungsdetails des erfindungsgemäßen Verfahrens zum Annotieren eines Datensatzes, des erfindungsgemäßen Computerprogramms, des erfindungsgemäßen computerlesbaren Speichermediums, der erfindungsgemäßen Vorrichtung zum Überprüfen von Datensätzen und der erfindungsgemäßen Vorrichtung zum Annotieren eines Datensatzes kann auf die vorstehende Beschreibung zu den entsprechenden Merkmalen des Verfahrens zum Überprüfen von Datensätzen verwiesen werden.

Ausführungsbeispiele der Erfindung werden nachfolgende anhand einer Zeichnung weiter erläutert. Darin zeigen:
- Figur 1: ein erstes Ausführungsbeispiel des erfindungsgemäßen computerimplementierten Verfahrens zum Überprüfen von Datensätzen als schematisches Ablaufdiagramm,
- Figur 2: einen schematischen Aufbau eines erstes Ausführungsbeispiels der erfindungsgemäßen Vorrichtung zum Überprüfen von Datensätzen,
- Figur 3: eine schematische Darstellung eines ersten und zweiten Datensatzes gemäß dem ersten Ausführungsbeispiel des erfindungsgemäßen Verfahrens,
- Figur 4: ein zweites Ausführungsbeispiel des erfindungsgemäßen computerimplementierten Verfahrens zum Überprüfen von Datensätzen als schematisches Ablaufdiagramm,
- Figur 5: ein erste Ausführungsbeispiel des erfindungsgemäßen computerimplementierten Verfahrens zum Annotieren von Datensätzen und
- Figur 6: einen schematischen Aufbau eines ersten Ausführungsbeispiels der erfindungsgemäßen Vorrichtung zum Annotieren eines Datensatzes.

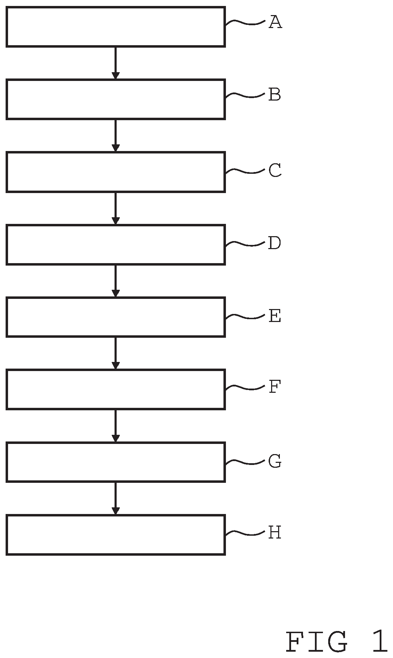

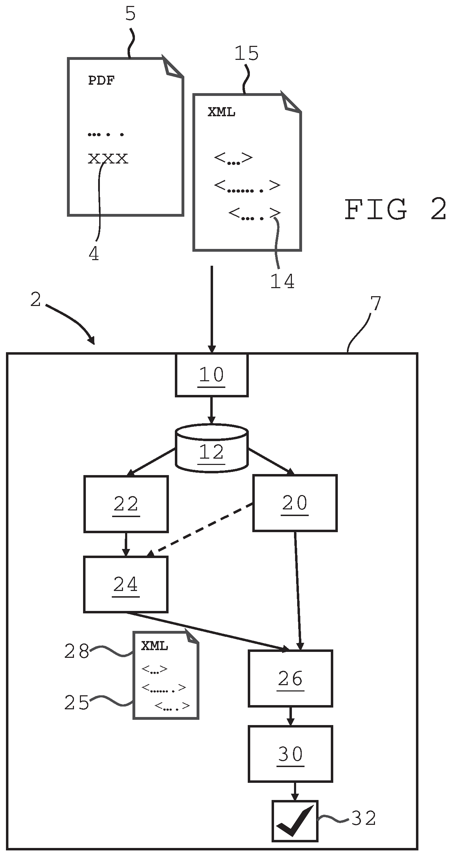

Figur 1 zeigt das erste Ausführungsbeispiel des erfindungsgemäßen computerimplementierten Verfahrens als schematisches Ablaufdiagramm. Die Verfahrensschritte werden im Folgenden in Verbindung mit dem in Figur 2 gezeigten ersten Ausführungsbeispiel der erfindungsgemäßen Vorrichtung 2 beschrieben.

Figur 2 zeigt die Elemente der Vorrichtung 2 und ihre datentechnischen Verbindungen miteinander. Diese Elemente können auf mehrere, physikalisch getrennte Einheiten verteilt sein. Alternativ können die Elemente Teil eines Computers 7 sein. Zudem ist bevorzugt, die beschriebenen Elemente zumindest teilweise als Softwarekomponenten, die auf dem Computer 7 zur Ausführung gebracht werden, auszubilden.

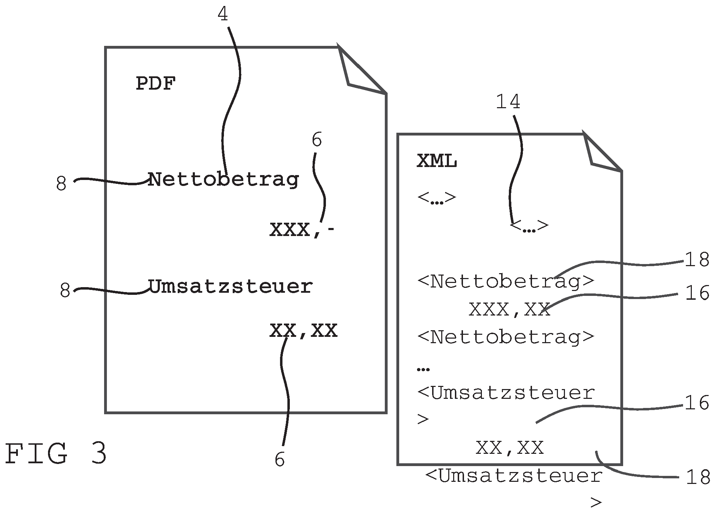

In einem ersten Verfahrensschritt A wird ein erster Datensatz 4 bereitgestellt, welcher erste Informationen mit Bildinformationen enthält. Der erste Datensatz 4 wird beispielsweise als Dokument in Form einer PDF-Datei 5 (PDF: Portable Document Format) bereitgestellt. Eine schematische Darstellung des ersten Datensatzes 4 ist in Figur 3 gezeigt. Demnach sind die ersten Informationen Teil der PDF-Datei. Bei Aufruf der PDF-Datei werden die ersten Informationen als Bild und Text repräsentiert. Mit anderen Worten: Beim Anzeigen der PDF-Datei mittels einer optischen Anzeigeeinheit des Computers 7, beispielsweise eines Displays, ist die Information für einen Benutzer optisch wahrnehmbar. Der erste Datensatz ist als unstrukturiert dahingehend zu verstehen, dass die zugehörigen Daten kein festes, vordefiniertes Format aufweisen. Im Gegensatz zu strukturierten Daten, haben unstrukturierte Daten keine feste Struktur, die sich regelbasiert und deterministisch analysieren lässt. Folglich sind die unstrukturierten Daten nicht mittels eines Computers regelbasiert auslesbar.

Die ersten Informationen umfassen mehrere Informationsinhalte 6. Zudem umfassen die Informationen mehrere Informationskontexte 8, wobei einer der Informationsinhalte 6 jeweils einem der mehreren Informationskontexte 8 zugeordnet ist. Ein Beispiel für einen Informationskontext 8 ist die Information, dass es sich bei dem zugeordneten Informationsinhalt 6, der ein Geldbetrag ist, um einen Nettobetrag bzw. eine Umsatzsteuer auf einer Rechnung handelt. Der Informationsinhalt 6 ist demnach der Wert des Nettobetrags bzw. der Wert der Umsatzsteuer an sich, beispielsweise € XXX,- bzw. € XX,XX (siehe Figur 3).

Die Bereitstellung erfolgt beispielsweise dadurch, dass die PDF-Datei 5 mittels einer Empfangseinheit 10 empfangen und mittels einer Speichereinheit 12 gespeichert wird. Die Empfangseinheit 10 umfasst beispielsweise eine Eingabe-Ausgabe-Schnittstelle zum Empfangen der PDF-Datei 5 über ein Netzwerk, an das die Empfangseinheit 10 angeschlossen ist. Die Speichereinheit 12 umfasst beispielsweise einen nicht-volatilen Speicher. Diese Speichereinheit 12 kann eine Festplatte des Computers 7 sein.

In einem zweiten Verfahrensschritt B wird ein zweiter Datensatz 14 bereitgestellt, welcher zweite Informationen in einem strukturierten Datenform enthält. Demnach sind die Daten in einem vordefinierten Format bzw. in einer vorgegebenen Struktur organisiert und gespeichert. Durch die Struktur des zweiten Datenformats ist dieser zweite Datensatz 14 mittels einer Leseeinheit 20 des Computers 7 auslesbar, welche beim Auslesen die Struktur berücksichtigt bzw. sich an dieser orientiert. Die zweiten Informationen umfassen mehrere Informationsinhalte 16. Diese Informationsinhalte 16 sind jeweils einem Informationskontext 18 zugeordnet. Dabei entspricht zumindest ein Informationskontext 18 einem der Informationskontexte 8 der ersten Informationen. Dies bedeutet beispielsweise, dass der Informationskontext 18 der zweiten Informationen angibt, dass es sich bei dem zugeordneten Informationsinhalt 16 um einen Nettobetrag bzw. eine Umsatzsteuer handelt.

Der zweite Datensatz 14 wird beispielsweise als Dokument in Form einer XML-Datei 15 bereitgestellt. Die Bereitstellung erfolgt beispielsweise dadurch, dass die XML-Datei 15 gemeinsam mit der PDF-Datei 5 mittels der Empfangseinheit 10 empfangen und mittels der Speichereinheit 12 gespeichert wird. Für die Übertragung beider Dateien bis zum Empfang ist die XML-Datei 15 in der PDF-Datei 5 eingebettet oder dieser beigefügt.

Die vorstehend beschriebenen Beispiele für Informationsinhalt 6 bzw. 16 und Informationskontext 8 bzw. 18 können ein Ausführungsbeispiel betreffen, bei dem eine E-Rechnung im ZUGFeRD-Format (Zentraler User Guide des Forums elektronische Rechnung Deutschland) als PDF-Datei 5 bereitgestellt wird und die zugehörige XML-Datei 15 eingebettet oder beigefügt ist.

In einem Verfahrensschritt C wird der Inhalt der PDF-Datei 5 und der in der PDF-Datei 5 vorhandene erste Datensatz 4 mittels einer Erfassungseinheit 22 erfasst. Hierfür wird der ersten Datensatz 4 der Speichereinheit 12 entnommen. Durch das Erfassen können die Daten einer Extraktionseinheit 24 zugeführt werden. Mit anderen Worten: Bei dem Erfassen C wird der Informationsinhalt 6 oder Informationskontext 8 noch nicht erkannt oder ausgewertet.

Aus dem erfassten ersten Datensatz 4 werden in einem Verfahrensschritt D die Informationsinhalte 6 und Informationskontexte 8 mittels der Extraktionseinheit 24 extrahiert.

Das Extrahieren erfolgt beispielsweise mit Hilfe eines mathematischen Modells. Dabei wird für das Extrahieren von Bildinformationen ein Vision Transformer (ViT) verwendet. Dieser zerlegt die Bildinformation in Patches, die einen Teilbereich des Bilds in Form eines Kästchens abdecken. Diese Patches werden in Reihe einem Transformer-Encoder zugeführt. Der ViT basiert demnach auf einer Transformer-Architektur. Eine Eingangsvariable des ViTs ist die PDF-Datei 5. Eine Ausgangsvariable ist beispielsweise der erkannte Informationsinhalt 6 und der erkannte zugeordnete Informationskontext 8. Als Trainingsdaten können E-Rechnungen nach dem ZUGFeRD-Format verwendet werden, für die der korrekte, unverfälschte Output des ViTs bekannt ist. Die Eingangsvariable für das Training ist demnach eine jeweilige PDF-Datei der elektronischen Rechnungen im ZUGFeRD-Format.

Alternativ erfolgt das Extrahieren beispielsweise mit Hilfe eines mathematischen Modells, bei dem eine YOLO8-Architektur (You Only Look Once Version 8) verwendet wird. YOLO basiert auf einem Convolutional Neural Network (CNN) mit einer Mehrzahl von Schichten. Eine Eingangsvariable der YOLO-Architektur ist beispielsweise die PDF-Datei als zweidimensionales Bild, welches bei Anzeige mittels einer Anzeigeeinheit eine Rechnung zeigt. Eine Ausgangsvariable ist beispielsweise der erkannte Informationsinhalt und der erkannte zugeordneten Informationskontext. Das Training erfolgt beispielsweise durch überwachtes Lernen. Als Trainingsdaten können E-Rechnungen nach dem ZUGFeRD-Format verwendet werden, für die der korrekte, unverfälschte Output der YOLO-Architektur bekannt ist.

Die genannten konkreten mathematischen Modelle werden für eine Erkennung von Text mit OCR (Optical Character Recognition) kombiniert.

Durch das Extrahieren der Informationsinhalte 6 und der Informationskontexte 8, die einem jeweiligen Informationsinhalt zugeordnet sind, wird in einem Verfahrensschritt E ein Duplikat 28 der ersten Informationen erstellt. Das Duplikat ist computerlesbar und beispielsweise eine XML-Datei 25.

In einem Verfahrensschritt F wird der zweite Datensatz 14 mittels der Leseeinheit 20 aus der XML-Datei 15 ausgelesen. Hierfür wird die Struktur der XML-Datei 15 berücksichtigt.

In einem Verfahrensschritt G werden die aus dem ersten Datensatz 4 extrahierten Informationsinhalte 6 mit den ausgelesenen Informationsinhalten 16 der zweiten Informationen mittels einer Vergleichseinheit 26 verglichen. Dabei wird nämlich jeweils der aus dem ersten Datensatz 4 extrahierte Informationsinhalt 6 mit einem Informationsinhalt 16 der zweiten Informationen verglichen, wobei der Informationsinhalt 16 der zweiten Informationen dem Informationskontext 18 der zweiten Informationen zugeordnet ist. Dieser Informationskontext 18 entspricht dem Informationskontext 8 der ersten Informationen, welcher dem aus dem ersten Datensatz 4 extrahierten ersten Informationsinhalt 6 zugeordnet ist.

Insbesondere wird der Informationsinhalt 6 aus dem Duplikat als XML-Datei 25 mit dem Informationsinhalt 16 der zweiten Informationen der XML-Datei 15 verglichen.

In einem Verfahrensschritt H wird auf Basis des Vergleichs ein Prüfergebnis 32 mittels einer Ausgabeeinheit 30 ausgegeben. Das Prüfergebnis 32 gibt an, ob und, wenn ja, welcher aus dem ersten Datensatz 4 extrahierte Informationsinhalt 6 mit dem mit diesem verglichenen Informationsinhalt 16 aus den zweiten Informationen übereinstimmt. Bei dem Beispiel einer elektronischen Rechnung als PDF-Datei 5 mit zugehöriger XML-Datei 15 ist es nämlich wünschenswert, dass die Informationsinhalte 6 bzw. 16, welche einem entsprechenden Informationskontext 8 bzw. 18 zugeordnet sind, gleich sind. Dabei soll insbesondere erkannt werden, ob der Informationsinhalt 16 verfälscht ist. So ist es beispielsweise wünschenswert, dass die Rechnungsbeträge in der PDF-Datei 5 und XML-Datei 15 gleich sind.

Die Ausgeben H erfolgt beispielsweise optisch, indem das Prüfergebnis 32 einem Benutzer des Computers 7 mittels einer optischen Anzeigeeinheit (nicht gezeigt) angezeigt wird. Beispielsweise wird ein fehlerhafter Informationsinhalt als Markierung in dem PDF-Dokument angezeigt.

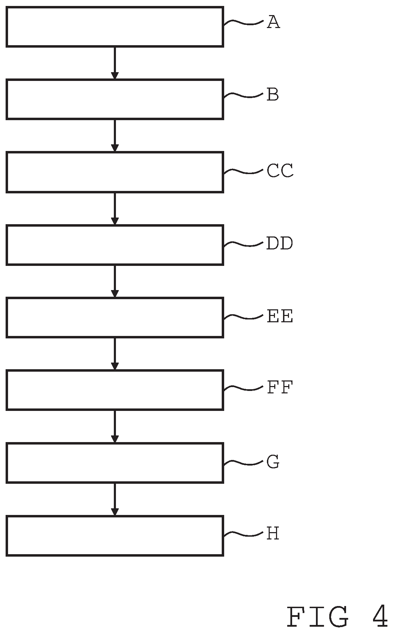

Figur 4 zeigt das zweite Ausführungsbeispiel des erfindungsgemäßen computerimplementierten Verfahrens als schematisches Ablaufdiagramm. Die Verfahrensschritte werden im Folgenden in Verbindung mit dem in Figur 2 gezeigten ersten Ausführungsbeispiel der erfindungsgemäßen Vorrichtung 2 beschrieben. Gleiche und funktionsgleiche Verfahrensschritte werden dabei mit denselben Bezugszeichen wie in Figur 1 versehen. Das in Figur 4 gezeigte Verfahren unterscheidet sich von dem in Figur 1 gezeigten Verfahren im Wesentlichen dadurch, dass das Extrahieren des Informationsinhalts 6 aus dem ersten Datensatz 4 anhand von dem Informationskontext 18 des zweiten Datensatzes 14 erfolgt. Demnach entspricht das in Figur 4 gezeigte Verfahren in seinen Verfahrensschritten A und B dem in Figur 1 gezeigten Verfahren.

In einem Verfahrensschritt CC wird der zweite Datensatz 14 mittels der Leseeinheit 20 aus der XML-Datei 15 ausgelesen.

In einem Verfahrensschritt DD wird der Inhalt der PDF-Datei 5 und der in der PDF-Datei 5 vorhandene erste Datensatz 4 mittels einer Erfassungseinheit 22 erfasst. Hierfür wird der ersten Datensatz 4 der Speichereinheit 12 entnommen.

Aus dem erfassten ersten Datensatz 4 werden in einem Verfahrensschritt EE die Informationsinhalte 6 und Informationskontexte 8 mittels einer Extraktionseinheit 24 extrahiert. Dabei wird der in Verfahrensschritt CC ausgelesene Informationskontext 18 berücksichtigt (dies ist in Figur 2 durch einen gestrichelten Pfeil dargestellt). Mit anderen Worten: Es wird bei dem Verfahrensschritt DD in der PDF-Datei 5 nach einem Informationskontext 8 gesucht, der dem ausgelesenen Informationskontext 18 entspricht.

Zudem erfolgt das Extrahieren EE anhand eines Schemas, welches die Struktur der XML-Datei 15 repräsentiert.

Durch das Extrahieren EE der Informationsinhalte 6 und der Informationskontexte 8, die einem jeweiligen Informationsinhalt zugeordnet sind, wird in einem Verfahrensschritt FF ein Duplikat 28 der ersten Informationen erstellt. Das Duplikat ist computerlesbar und beispielsweise eine XML-Datei 25.

In einem Verfahrensschritt G werden die aus dem ersten Datensatz 4 extrahierten Informationsinhalte 6 mit den ausgelesenen Informationsinhalten 16 der zweiten Informationen mittels einer Vergleichseinheit 26 verglichen. Dieser Verfahrensschritt G und die folgenden Verfahrensschritte H und etwaige weitere Verfahrensschritte entsprechen dem in Figur 1 gezeigten ersten Ausführungsbeispiel des erfindungsgemäßen computerimplementierten Verfahrens.

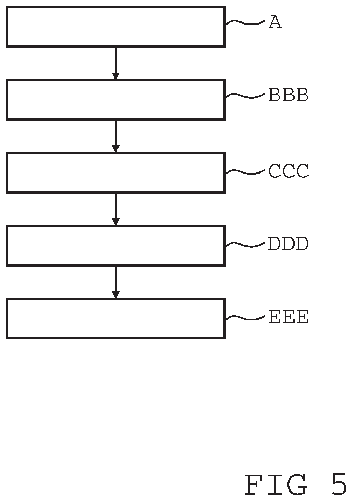

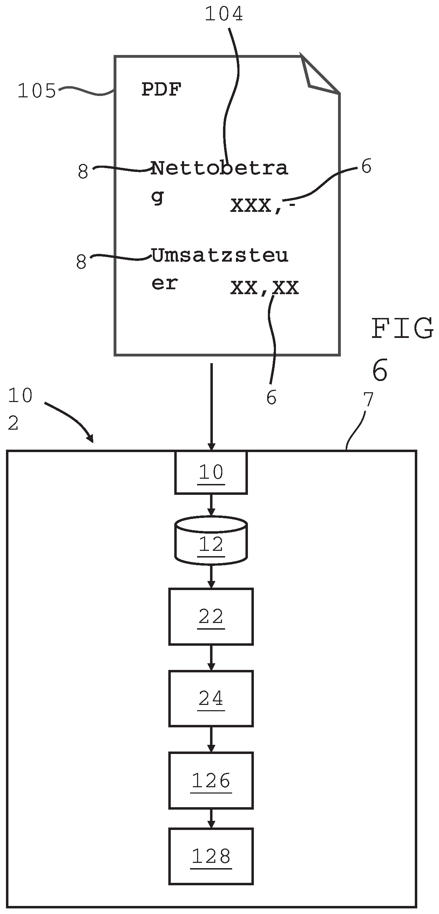

Figur 5 zeigt das erste Ausführungsbeispiel des erfindungsgemäßen computerimplementierten Verfahrens zum Annotieren eines Datensatzes als schematisches Ablaufdiagramm. Die Verfahrensschritte werden im Folgenden in Verbindung mit dem in Figur 6 gezeigten ersten Ausführungsbeispiel der erfindungsgemäßen Vorrichtung 102 beschrieben. Gleiche und funktionsgleiche Elemente und Verfahrensschritte werden dabei mit denselben Bezugszeichen wie in Figur 1 versehen.

In einem Verfahrensschritt A wird ein Datensatz 104 bereitgestellt, welcher erste Informationen mit Bildinformationen enthält. Der erste Datensatz 104 wird beispielsweise als Dokument in Form einer PDF-Datei 105 bereitgestellt. Das Bereitstellen des ersten Datensatzes 104 gemäß dem Verfahrensschritt A von Figur 5 entspricht im Wesentlichen dem Bereitstellen gemäß dem Verfahrensschritt A von Figur 1.

In einem Verfahrensschritt BBB wird der Inhalt der PDF-Datei 105 und der in der PDF-Datei 105 vorhandene erste Datensatz 104 mittels einer Erfassungseinheit 22 erfasst. Hierfür wird der ersten Datensatz 104 in der Speichereinheit 12 erfasst.

In einem Verfahrensschritt CCC wird aus dem Datensatz 104 zumindest ein Informationsinhalt 6 und zumindest ein dem Informationsinhalt 6 zugeordneter Informationskontext 8 mittels eine Extraktionseinheit 24 extrahiert.

In einem Verfahrensschritt DDD wird der extrahierte erste Informationsinhalt 6 und der diesem zugeordnete Informationskontext 8 in ein strukturiertes Datenformat mittels einer Überführungseinheit 126 überführt.

In einem Verfahrensschritt EEE wird der in das strukturierte Datenformat überführte Informationsinhalt 6 und der diesem zugeordnete Informationskontext 8 zu dem Datensatz als Metainformation mittels einer Hinzufügeeinheit 128 hinzugefügt. So können die Metainformationen der PDF-Datei 105 als Metadaten angehängt oder in diese eingebettet werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Verfahren zum Überprüfen von Datensätzen,
wobei die Datensätze umfassen:
- einen ersten Datensatz (4), welcher erste Informationen mit Bild-, Audio- und/oder Videoinformationen enthält, wobei die ersten Informationen zumindest einen Informationskontext (8) und zumindest einen dem Informationskontext (8) zugeordneten Informationsinhalt (6) umfassen,
- einen zweiten Datensatz (14), welcher zweite Informationen in einem strukturierten Datenformat enthält, wobei die zweiten Informationen zumindest einen Informationskontext (18) und zumindest einen dem Informationskontext (18) zugeordneten Informationsinhalt (16) umfassen, wobei der Informationskontext (18) der zweiten Informationen dem Informationskontext (8) der ersten Informationen entspricht,
wobei das Verfahren die folgenden Schritte umfasst:
- Extrahieren (D, EE), aus dem ersten Datensatz (4), zumindest eines der Informationsinhalte (6) und jenes diesem Informationsinhalt (6) zugeordneten Informationskontextes (8),
- Vergleichen (G) des zumindest einen aus dem ersten Datensatz (4) extrahierten Informationsinhalts (6) mit zumindest einem Informationsinhalt (16) der zweiten Informationen, der einem Informationskontext (18) der zweiten Informationen zugeordnet ist, der jenem Informationskontext (8) der ersten Informationen entspricht, der dem aus dem ersten Datensatz (4) extrahierten ersten Informationsinhalt (6) zugeordnet ist, und
- Ausgeben (H) eines Prüfungsergebnisses, ob und welcher der aus dem ersten Datensatz (4) extrahierte Informationsinhalt (6) mit dem mit diesem verglichenen Informationsinhalt (16) aus den zweiten Informationen übereinstimmt.

2. Computerimplementiertes Verfahren nach Anspruch 1,
**dadurch gekennzeichnet, dass**
der zweite Datensatz (16) als die zweiten Informationen eine strukturierte Repräsentation der ersten Informationen des ersten Datensatzes (4) umfasst.

3. Computerimplementiertes Verfahren nach einem der vorhergehenden Ansprüche,
**dadurch gekennzeichnet, dass**
das Extrahieren (D) zumindest eines der Informationsinhalte (6) und jenes diesem Informationsinhalt (6) zugeordneten Informationskontextes (8) mittels Audioerkennung und/oder Bilderkennung und/oder Texterkennung erfolgt.

4. Computerimplementiertes Verfahren nach einem der vorhergehenden Ansprüche, **dadurch gekennzeichnet, dass**
- die ersten Informationen Teil einer Audiodatei sind und
- die zweiten Informationen ein computerlesbares Transkript der Audiodatei sind.

5. Computerimplementiertes Verfahren nach einem der Ansprüche 1 bis 3,
**dadurch gekennzeichnet, dass**
die ersten Informationen Teil einer PDF-Datei (5) sind.

6. Computerimplementiertes Verfahren nach einem der vorhergehenden Ansprüche,
**dadurch gekennzeichnet, dass**
die ersten Informationen Rechnungsinformationen umfassen und
der zweite Datensatz (14) eine computerlesbare Rechnung im Json-, YAML-, und/oder XML-Format umfasst und/oder dass der erste und der zweite Datensatz Teil einer E-Rechnung sind.

7. Computerimplementiertes Verfahren nach einem der vorhergehenden Ansprüche,
**dadurch gekennzeichnet, dass**
- durch das Extrahieren (D) des zumindest einen der Informationsinhalte (6) und des diesem Informationsinhalt (6) zugeordneten Informationskontextes (8) ein teilweises oder vollständiges Duplikat (28) der ersten Informationen erstellt wird (E, FF), welches Duplikat (28) computerlesbar ist, und
- beim Vergleichen zumindest ein Informationsinhalt (6) aus dem Duplikat (28) mit dem zumindest einen Informationsinhalt (16) der zweiten Informationen verglichen wird.

8. Computerimplementiertes Verfahren nach einem der vorhergehenden Ansprüche,
**dadurch gekennzeichnet, dass**
das Extrahieren (D), aus dem ersten Datensatz (4), zumindest eines der Informationsinhalte (6) und jenes diesem Informationsinhalt (6) zugeordneten Informationskontextes (8) anhand eines Schemas erfolgt, mittels dessen Informationsinhalte (6) und Informationskontexte (8) des ersten Datensatzes (4) Informationsinhalten (16) und Informationskontexten (18) des zweiten Datensatzes (14) einander zugeordnet sind.

9. Computerimplementiertes Verfahren nach einem der vorhergehenden Ansprüche 1 bis 6, **dadurch gekennzeichnet, dass**
- das Extrahieren (D), aus dem ersten Datensatz (4), zumindest eines der Informationsinhalte (6) und jenes diesem Informationsinhalt (6) zugeordneten Informationskontextes (8), anhand von zumindest einem Informationskontext (8) des zweiten Datensatzes (14) erfolgt und
- beim Vergleichen (G) der so aus dem ersten Datensatz (4) extrahierte Informationsinhalt (6) mit dem Informationsinhalt (16) der zweiten Informationen verglichen wird, der dem Informationskontext (18) dieses Informationsinhalts (16) der zweiten Informationen zugeordnet ist.

10. Computerimplementiertes Verfahren zum Annotieren eines Datensatzes (104), wobei der Datensatz (104) erste Informationen mit Bild-, Audio- und/oder Videoinformationen enthält, wobei die ersten Informationen zumindest einen Informationskontext (8) und zumindest einen dem Informationskontext (8) zugeordneten Informationsinhalt (6) umfassen, **gekennzeichnet durch**
- Extrahieren (CCC), aus dem Datensatz (104), zumindest eines der Informationsinhalte (6) und jenes diesem Informationsinhalt (6) zugeordneten Informationskontextes (8),
- Überführen (DDD) des erkannten ersten Informationsinhalts (6) und des diesem zugeordneten Informationskontextes (8) in ein strukturiertes Datenformat und
- Hinzufügen (EEE) des in das strukturierte Datenformat überführten Informationsinhalts (6) und des diesem zugeordneten Informationskontextes (8) zu dem Datensatz (104) als Metainformation.

11. Computerprogramm mit Programmcode, welcher bei Ausführung auf einem Computer (7) diesen veranlasst, das computerimplementierte Verfahren zum Überprüfen von Datensätzen nach einem der Ansprüche 1 bis 9 oder das computerimplementierte Verfahren zum Annotieren eines Datensatzes (104) nach Anspruch 10 auszuführen.

12. Computerlesbares Speichermedium mit Programmcode, welcher bei Ausführung auf einem Computer (7) diesen veranlasst, das computerimplementierte Verfahren zum Vergleichen von Informationen nach wenigstens einem der Ansprüche 1 bis 9 oder das computerimplementierte Verfahren zum Annotieren eines Datensatzes (104) nach Anspruch 10 auszuführen.

13. Vorrichtung zum Überprüfen von Datensätzen,
wobei die Datensätze umfassen:
- einen ersten Datensatz (4), welcher erste Informationen mit Bild-, Audio- und/oder Videoinformationen enthält, wobei die ersten Informationen zumindest einen Informationskontext (8) und zumindest einen dem Informationskontext (8) zugeordneten Informationsinhalt (6) umfassen,
- einen zweiten Datensatz (14), welcher zweite Informationen in einem strukturierten Datenformat enthält, wobei die zweiten Informationen zumindest einen Informationskontext (18) und zumindest einen dem Informationskontext (18) zugeordneten Informationsinhalt (16) umfassen, wobei der Informationskontext (18) der zweiten Informationen dem Informationskontext (8) der ersten Informationen entspricht,
wobei die Vorrichtung umfasst:
- eine Extraktionseinheit (24), welche eingerichtet ist, aus dem ersten Datensatz (4) zumindest einen der Informationsinhalte (6) und jenen diesem Informationsinhalt (6) zugeordneten Informationskontext (8), zu extrahieren (D, EE),
- eine Vergleichseinheit (26), welche eingerichtet ist, den zumindest einen aus dem ersten Datensatz (4) extrahierten Informationsinhalt (6) mit zumindest einem Informationsinhalt (16) der zweiten Informationen, der einem Informationskontext (18) der zweiten Informationen zugeordnet ist, der jenem Informationskontext (8) der ersten Informationen entspricht, der dem aus dem ersten Datensatz (4) extrahierten ersten Informationsinhalt (6) zugeordnet ist, zu vergleichen (G), und
- eine Ausgabeeinheit (30), welche eingerichtet ist, ein Prüfungsergebnis (32) auszugeben (H), ob und welcher der aus dem ersten Datensatz (4) extrahierte Informationsinhalt (6) mit dem mit diesem verglichenen Informationsinhalt (16) aus den zweiten Informationen übereinstimmt.

14. Vorrichtung zum Annotieren eines Datensatzes (104),
wobei der Datensatz (104) erste Informationen mit Bild-, Audio- und/oder Videoinformationen enthält, wobei die ersten Informationen zumindest einen Informationskontext (8) und zumindest einen dem Informationskontext (8) zugeordneten Informationsinhalt (4) umfassen,
wobei die Vorrichtung umfasst:
- eine Extraktionseinheit (24), die eingerichtet ist, aus dem Datensatz (104) zumindest einen der Informationsinhalte (6) und jenen diesem Informationsinhalt (6) zugeordneten Informationskontext (8) zu extrahieren (CCC),
- eine Überführungseinheit (126), die eingerichtet ist, den erkannten ersten Informationsinhalt (6) und den diesem zugeordneten Informationskontext (8) in ein strukturiertes Datenformat zu überführen (DDD), und
- eine Hinzufügungseinheit (128), die eingerichtet ist, den in das strukturierte Datenformat überführten Informationsinhalt (6) und den diesem zugeordneten Informationskontext (8) zu dem Datensatz (104) als Metainformation hinzuzufügen (EEE).
